# EUROPEAN PATENT APPLICATION

(11) **EP 3 434 546 A1**
(43) Date of publication of application: **30.01.2019**
(21) Application number: 18185989.3
(22) Date of filing: 27.07.2018
(51) Int. Cl.: B60W 50/02, G06K 9/00

(54) **SENSOR FAILURE COMPENSATION SYSTEM FOR AN AUTOMATED SYSTEM VEHICLE**

(30) Priority: 27.07.2017 US 201715661604
(71) Applicant: Aptiv Technologies Limited, St. Michael (BB)
(72) Inventor: KIM, Junsung, Pittsburgh, PA 15206 (US); XU, Wenda, Pittsburgh, PA 15213 (US); WEI, Junqing, Bridgeville, PA 15017 (US); LEE, Jong Ho, Pittsburgh, PA 15211 (US)
(74) Representative: Conroy, John

(57) **Abstract**

A sensor failure compensation system (46) for an automated vehicle (20) includes first and second sensors (24, 26), and a controller (36). The first sensor (24) is configured to monitor a first condition (28) and output a first signal (32) associated with the first condition (28). The second sensor (26) is configured to monitor a second condition (30) and output a second signal (34) associated with the second condition (30). The controller (36) is configured to receive and process the first signal (32) to establish a first reaction relative to the first condition (28) and toward reaching a goal, receive and process the second signal (34) to establish a second reaction relative to the second condition (30) and toward reaching the goal, and establish a third reaction relative to the second condition (30) and toward reaching the goal if the first sensor (24) is malfunctioning.

## Description

### BACKGROUND OF THE INVENTION

The present disclosure relates to an automated vehicle, and more particularly, to a sensor failure compensation system of the automated vehicle.

The operation of modern vehicles is becoming increasingly autonomous, causing a decrease in driver intervention. The various control features are becoming increasingly complex while vehicle accuracy, efficiency, and reliability must be at least maintained. The complex nature of such automated systems may require a large number of sensors. Such sensors may, at times, malfunction causing the vehicle to cease all operations, or degrade substantially in performance.

### SUMMARY OF THE INVENTION

In one, non-limiting, exemplary embodiment of the present disclosure, a sensor failure compensation system for an automated vehicle includes a first sensor, a second sensor, and a controller. The first sensor is configured to monitor a first condition and output a first signal associated with the first condition. The second sensor is configured to monitor a second condition and output a second signal associated with the second condition. The controller is configured to receive and process the first signal to establish a first reaction relative to the first condition and toward reaching a goal, to receive and process the second signal to establish a second reaction relative to the second condition and toward reaching the goal, and to establish a third reaction relative to the second condition and toward reaching the goal if the first sensor is malfunctioning.

In another, non-limiting, embodiment, an automated vehicle includes at least one vehicle control, and a sensor failure compensation system. The at least one vehicle control is adapted to produce a plurality of vehicle reactions. The sensor failure compensation system includes a first sensor, a second sensor, and a controller. The first sensor is configured to monitor a first region and output a first signal associated with the first region. The second sensor is configured to monitor a second region and output a second signal associated with the second region. The controller is configured to receive and process the first signal to establish a first reaction of the plurality of vehicle reactions relative to the first region and toward reaching a goal, and to receive and process the second signal to establish a second reaction of the plurality of vehicle reactions relative to the second region and toward reaching the goal. The controller is further configured to establish a third reaction that is relative to the second region, is an alternative to the first reaction, and is toward reaching the goal if the first sensor is malfunctioning.

In another, non-limiting, embodiment, a computer software product is executed by a controller of an automated vehicle that includes first and second sensors configured to output respective first and second signals associated with respective first and second regions. The computer software product includes a first module, a second module, and a compensation module. The first module is configured to receive and process the first signal toward performing a first task. The second module is configured to receive and process the second signal toward performing a second task. The compensation module is configured to receive the second signal upon failure of the first module receiving the first signal, and to perform a third task as an alternative to the first task.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a top view of a host vehicle on a roadway and depicted with a sensor failure compensation system; and
FIG. 2 is a schematic of the host vehicle with the sensor failure compensation system.

### DETAILED DESCRIPTION

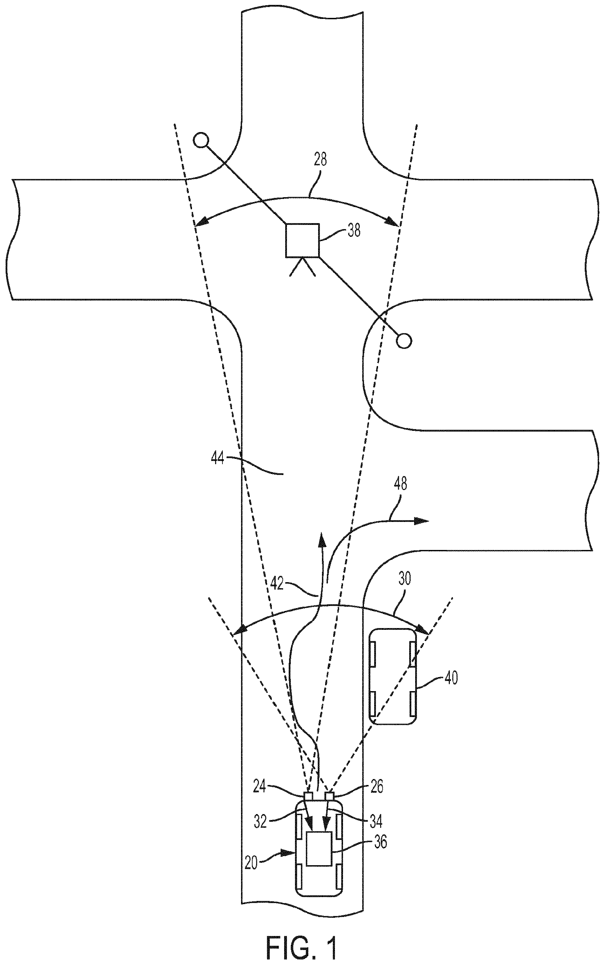

FIG. 1 illustrates a non-limiting example of a semi-autonomous or autonomous vehicle 20 (hereafter termed automated or host vehicle) that may include various systems and components that may contribute toward partial or full automated operation of the host vehicle 20. The various components and/or systems may control the speed, direction (e.g., steering), brakes and other aspects of the vehicle operation necessary for the host vehicle 20 to, for example, generally travel along a roadway. Such vehicle travel may be without the interaction of an occupant (not shown) within the host vehicle 20.

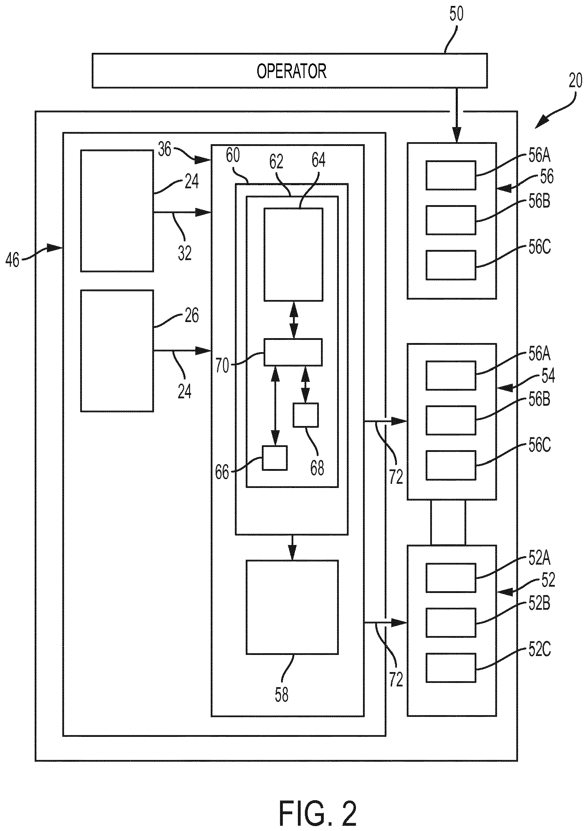

Referring to FIGS. 1 and 2, the host vehicle 20 may include first and second sensors 24, 26 configured to monitor respective first and second conditions (see arrows 28, 30, e.g., field of views), and output respective first and second signals (see arrows 32, 34) to a controller 36 (see FIG. 2). During normal operation, the controller 36 may process the first and second signals 32, 34, and effect independent first and second vehicle reactions, or tasks, associated with the respective first and second signals 32, 34. In one, non-limiting, example, the sensors 24, 26 may be mounted toward the front of the host vehicle 20, and may be adapted to monitor conditions or regions within a space. In this example, the sensors may be a radar sensor, an imaging device (e.g., camera), a LiDAR device, or other sensors or combinations of sensors capable of monitoring regions of space. In one embodiment and as illustrated, the first sensor 24 may be a long distance imaging device configured to monitor a long range scene as the first scene 28. The second sensor 26 may be a short distance imaging device configured to monitor a short range scene as the second scene 30. It is contemplated and understood that the term "condition" may refer to a scene, a region of space, or an object that is specifically being monitored for within a region (e.g., street lights, stop signs, parked cars, etc.).

In one embodiment, the first sensor 24, as a long distance imaging device, may be configured to monitor or detect far-off objects 38 (e.g., traffic lights). As such, an example of a first vehicle reaction may be preparations to stop the host vehicle 20 if the traffic signal illuminates red. The second sensor 26, as a short distance imaging device, may be configured to view objects 40 to the left or right of the vehicle, and to a degree, in front of the host vehicle 20. As such, an example of a second vehicle reaction may be to steer the host vehicle away (i.e., see arrow 42) from the object 40 (e.g., a parked vehicle) detected at the side of a road 44.

The host vehicle 20 includes a sensor failure compensation system 46. The sensor failure compensation system 46 may generally include the sensors 24, 26, and the controller 36. The system 46 functions to, at least partially, compensate for failure of one of the sensors 24, 26, thereby relying on the remaining operative sensor(s). Because the sensors 24, 26 may not be redundant sensors configured to perform the same task (i.e., each sensor monitors a different scene), the remaining operative sensor may generally be at a disadvantage. That is, if the long distance imaging device 24 fails, the sensor failure compensation system 46 may resort to using the short distance imaging device 26, and resort to a third, compensating, vehicle reaction. That is, since the long distance imaging device 24 can no longer detect traffic lights 38, and the short range imaging device 26 (i.e., as an example) cannot detect the traffic signals 38, the third, compensating, vehicle reaction may be to avoid traffic lights 38. Such avoidance (see arrow 48 in FIG. 1) may include an alteration of a route to reach an initial goal or destination by taking side streets known by the controller 36 not to include traffic lights. Alternatively, if the short range imaging device 26 can detect traffic lights but not as soon as the long range imaging device 24, the third vehicle reaction may be to slow down the host vehicle 20.

As previously stated, the host vehicle 20 may be semi-autonomous or fully autonomous. In the example of a semi-autonomous host vehicle 20, the host vehicle may be typically driven by an operator 50. In this case, an automation system (not shown) may provide assistance to the operator 50. This assistance may include the activation of a warning device 52 (see FIG. 2), and/or may include activating a control override unit 54 that temporarily takes over the control of manual controls 56 of the host vehicle 20 that are typically used by the operator 50. Such manual controls 56 may include a directional unit 564A (e.g., steering unit), an acceleration unit 56B, and a braking unit 56C of the host vehicle 20. The warning device 52 may include, or may be, an audible device 52A, a visual device 52B, and/or a haptic device 52C. In the example of a fully autonomous, host, vehicle 20, the automation system may simply command the controls 56 continuously, without significant operator intervention.

Referring to FIG. 2, sensor failure compensation system 46 may further include the warning device 52. The controller 36 may include a processor 58 and an electronic storage medium 60. The processor 58 may be a microprocessor or other control circuitry such as analog and/or digital control circuitry including an application specific integrated circuit (ASIC) for processing data as is known by one with skill in the art. The storage medium 60 of the controller 36 may be non-volatile memory, such as electrically erasable programmable read-only memory (EEPROM) for storing one or more routines, thresholds, and captured data, hereafter referred to as an application 62 (e.g., a computer software product). The application 62 may be executed by the processor 58 of the controller 36 to recognize when one of the sensors 24, 26 is compromised, and compensate for the compromised sensor by utilizing attributes of at least one other sensor and effecting an alternative reaction by the host vehicle 20.

The application 62 may include a database or electronic information file 64, a first sensor module 66, a second sensor module 68, and a compensation module 70. The database 64 and modules 66, 68, 70 may generally be stored in the electronic storage medium 60, and the modules 66, 68, 70 may be executed by the processor 58 of the controller 36. The database 64 may include preprogrammed information relative to travel routes, maps, geography, topology, and/or any other data that may assist the host vehicle 20, and/or sensor failure compensation system 46, in achieving a goal and/or destination.

In operation, the first and second sensors 24, 26 are configured to output the respective signals 32, 34 to the respective first and second modules 66, 68. Each module 66, 68 is configured to operate in conjunction with the respective sensor 24, 26 to at least assist in causing a desired, respective, reaction of the host vehicle. After processing the signals 32, 34, each respective module 66, 68 may determine a desired reaction of the host vehicle 20 and may output associated command signal(s) 72 to the override unit 54, the controls 56A, 56B, 56C, and/or the warning device 52 to achieve a goal.

During a scenario where, for example, the first sensor 24 malfunctions, becomes dirty, is knocked out of alignment, and/or simply fails to send a useable signal 32 to the first module 66, the compensation module 70 is initiated to execute alternative action. That is, the compensation module 70 may follow preprogrammed instructions to apply the second sensor 26 to achieve a third reaction of the host vehicle 20 as previously described. To achieve this third reaction (e.g., alternative route), the compensation module 70 may utilize the preprogrammed database 64 to determine an appropriate alternative route which may still achieve the final goal (e.g., destination).

Accordingly, a sensor failure compensation system 46 for automated operation of the host vehicle 20 advances the automated vehicle arts by enabling a system, application, or controller to perform self-diagnostics and compensating action, thereby improving overall vehicle performance and reliability.

The various functions described above may be implemented or supported by a computer program that is formed from computer readable program codes, and that is embodied in a computer readable medium. Computer readable program codes may include source codes, object codes, executable codes, and others. Computer readable mediums may be any type of media capable of being accessed by a computer, and may include Read Only Memory (ROM), Random Access Memory (RAM), a hard disk drive, a compact disc (CD), a digital video disc (DVD), or other forms.

Terms used herein such as component, application, module, system, and the like are intended to refer to a computer-related entity, either hardware, a combination of hardware and software, or software execution. By way of example, an application may be, but is not limited to, a process running on a processor, a processor, an object, an executable, a thread of execution, a program, and/or a computer. It is understood that an application running on a server and the server, may be a component. One or more applications may reside within a process and/or thread of execution and an application may be localized on one computer and/or distributed between two or more computers

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description.

### Embodiments

Although the present invention is defined in the attached claims, it should be understood that the present invention can also (alternatively) be defined in accordance with the following embodiments:
1. A sensor failure compensation system (46) for an automated vehicle (20), the sensor failure compensation system (46) comprising:
   a first sensor (24) configured to monitor a first condition (28) and output a first signal (32) associated with the first condition (28);
   a second sensor (26) configured to monitor a second condition (30) and output a second signal (34) associated with the second condition (30);
   a controller (36) configured to receive and process the first signal (32) to establish a first reaction relative to the first condition (28) and toward reaching a goal, configured to receive and process the second signal (34) to establish a second reaction relative to the second condition (30) and toward reaching the goal, and is configured to establish a third reaction relative to the second condition (30) and toward reaching the goal if the first sensor (24) is malfunctioning.
2. The sensor failure compensation system (46) set forth in embodiment 1, wherein the goal is a destination.
3. The sensor failure compensation system (46) set forth in embodiment 1, wherein the first sensor (24) is one of a long distance imaging device and a short distance imaging device and the second sensor (26) is the other of the long distance imaging device and the short distance imaging device.
4. The sensor failure compensation system (46) set forth in embodiment 1, wherein the first sensor (24) is a long distance imaging device, the second sensor (26) is a short distance imaging device, the first condition (28) is a long range scene, the second condition (30) is a short range scene, and the third reaction is slowing down of the vehicle (20).
5. The sensor failure compensation system (46) set forth in embodiment 1, wherein the first sensor (24) is a preferred sensor for a particular vehicle function, the second sensor (26) is a less capable, secondary, sensor for the particular vehicle function.
6. The sensor failure compensation system (46) set forth in embodiment 5, wherein the first and second sensors (24, 26) are of the same technology.
7. The sensor failure compensation system (46) set forth in embodiment 1, wherein the first sensor (24) is a long distance imaging device, the second sensor (26) is a short distance imaging device, the first condition (28) is a change in a signal light, and the third reaction is changing of a route to avoid signal lights.
8. The sensor failure compensation system (46) set forth in embodiment 1, wherein at least one of the first and second sensors (24, 26) is a radar sensor.
9. The sensor failure compensation system (46) set forth in embodiment 1, wherein at least one of the first and second sensors (24, 26) is a LiDAR sensor.
10. The sensor failure compensation system (46) set forth in embodiment 1, wherein at least one the first and second sensors (24, 26) is a camera.
11. The sensor failure compensation system (46) set forth in embodiment 1, wherein the controller (36) includes a processor (58) and an electronic storage medium (60).
12. An automated vehicle (20) comprising:
   at least one vehicle control adapted to produce a plurality of vehicle reactions; and
   a sensor failure compensation system (46) including;
      a first sensor (24) configured to monitor a first region and output a first signal (32) associated with the first region (28),
      a second sensor (26) configured to monitor a second region and output a second signal (34) associated with the second region (30), and
      a controller (36) configured to receive and process the first signal (32) to establish a first reaction of the plurality of vehicle reactions relative to the first region (28) and toward reaching a goal, configured to receive and process the second signal (34) to establish a second reaction of the plurality of vehicle reactions relative to the second region (30) and toward reaching the goal, and is configured to establish a third reaction that is relative to the second region (30), is an alternative to the first reaction, and is toward reaching the goal if the first sensor (24) is malfunctioning.
13. The automated vehicle (20) set forth in embodiment 12, wherein the controller (36) includes a processor (58) and an electronic storage medium (60).
14. The automated vehicle (20) set forth in embodiment 13, wherein the sensor failure compensation system (46) includes a first and second modules (66, 68) executed by the processor (58), stored in the electronic storage medium (60), and configured to receive and process the respective first and second signals (32, 34) to achieve the respective first and second reactions.
15. The automated vehicle (20) set forth in embodiment 14, wherein the sensor failure compensation system (46) includes a compensation module (70) executed by the processor (58), stored in the electronic storage medium (60), and configured to determine and implement the third reaction.
16. A computer software product (62) executed by a controller (36) of an automated vehicle (20) including first and second sensors (24, 26) configured to output respective first and second signals (32, 34) associated with respective first and second regions (28, 30), the computer software product (62) comprising:
   a first module (66) configured to receive and process the first signal (32) toward performing a first task;
   a second module (68) configured to receive and process the second signal (34) toward performing a second task; and
   a compensation module (70) configured to receive the second signal (34) upon failure of the first module (66) receiving the first signal (32), and to perform a third task as an alternative to the first task.
17. The computer software product (62) set forth in embodiment 16, further comprising a database (64) including preprogrammed instructions specifying the third task.
18. The computer software product (62) set forth in embodiment 17, wherein the third task is a reduction in vehicle speed.
19. A sensor comprising:
   a first sensor of a vehicle traveling a route configured to monitor a first condition and output a first signal associated with the first condition;
   a second sensor of a vehicle configured to monitor a second condition and output a second signal associated with the second condition; and
   a controller-circuit of the vehicle configured to:
      receive and process the first signal to establish a first reaction relative to the first condition;
      receive and process the second signal to establish a second reaction relative to the second condition;
      recognize, based on the first or second signals, that the first or second sensor is compromised; and
      in accordance with recognizing that the first or second sensor is compromised, initiating at least one of controlling the vehicle or determining an alternative route for the vehicle to compensate for the compromised sensor.
20. The system set forth in embodiment 19, wherein the first or second condition is an object that is specifically monitored for within a long-range or short-range scene.
21. The system set forth in embodiment 19, wherein the first sensor is a long distance imaging device and the second sensor is a short distance imaging device.
22. The system set forth in embodiment 19, wherein the first sensor is a long distance imaging device, the second sensor is a short distance imaging device, the first condition is a long range scene, the second condition is a short range scene, and in accordance with recognizing that the first sensor is compromised, the controller-circuit reduces the speed of the vehicle.
23. The system set forth in embodiment 19, wherein the first sensor is a preferred sensor for a particular vehicle function, the second sensor is a secondary sensor for the particular vehicle function.
24. The system set forth in embodiment 20, wherein, in accordance with recognizing that the first sensor is compromised, the controller-circuit uses the second sensor to steer the vehicle away from the object.
25. The system set forth in embodiment 19, wherein the first sensor is a long distance imaging device, the second sensor is a short distance imaging device, the first condition is a change in a signal light, and in accordance with recognizing that the first sensor is compromised, the controller-circuit computes an alternative route to avoid traffic signal lights.
26. The system set forth in embodiment 19, wherein at least one of the first and second sensors is a radar sensor.
27. The system set forth in embodiment 19, wherein at least one of the first and second sensors is a LiDAR sensor.
28. The system set forth in embodiment 19, wherein at least one the first and second sensors is a camera.
29. The system set forth in embodiment 24, wherein the object is a parked vehicle.
30. A vehicle comprising:
   a sensor failure compensation system including:
      a first sensor configured to monitor a first region and output a first signal associated with the first region,
      a second sensor configured to monitor a second region and output a second signal associated with the second region, and
      a controller-circuit configured to:
         receive and process the first signal to establish a first reaction relative to the first condition;
         receive and process the second signal to establish a second reaction relative to the second condition;
         recognize, based on the first or second signal, that the first or second sensor is compromised; and
         in accordance with recognizing that the first or second sensor is compromised, initiating at least one of controlling the vehicle or determining an alternative route for the vehicle to compensate for the compromised sensor.
31. The vehicle set forth in embodiment 30, wherein the controller-circuit includes a processor and an electronic storage medium.
32. The vehicle set forth in embodiment 31, wherein the sensor failure compensation system includes first and second modules executed by the processor, stored in the electronic storage medium, and configured to receive and process the respective first and second signals to achieve the respective first and second reactions.
33. The vehicle set forth in embodiment 32, wherein the sensor failure compensation system includes a compensation module executed by the processor, stored in the electronic storage medium, and configured to initiate at least one of controlling the vehicle or determining an alternative route for the vehicle to compensate for the compromised sensor.
34. A non-transitory, computer-readable storage medium having instructions stored thereon that when executed by a controller-circuit for a vehicle, cause the vehicle to perform one or more operations comprising:
   receive and process the first signal to establish a first reaction relative to the first condition;
   receive and process the second signal to establish a second reaction relative to the second condition;
   recognize, based on the first or second signal, that the first or second sensor is compromised; and
   in accordance with determining that the first or second sensor is compromised, initiating at least one of controlling the vehicle or determining an alternative route for the vehicle to compensate for the compromised sensor.
35. The non-transitory, computer-readable storage medium set forth in embodiment 16, further comprising a database including preprogrammed instructions for initiating at least one of controlling the vehicle or determining an alternative route for the vehicle to compensate for the compromised sensor.
36. The non-transitory, computer-readable storage medium set forth in embodiment 35, wherein the operations include controlling the vehicle by reducing the vehicle speed.
37. The non-transitory, computer-readable storage medium of embodiment 34, wherein the first sensor is a long distance imaging device, the second sensor is a short distance imaging device, the first condition is a change in a traffic signal light, and the alternative route for the vehicle avoids traffic signal lights.
38. The non-transitory, computer-readable storage medium of embodiment 34, wherein the first or second condition is an object that is specifically monitored for within a long-range or short-range scene.

## Claims

1. A sensor failure compensation system (46) for an automated vehicle (20), the sensor failure compensation system (46) comprising:
a first sensor (24) configured to monitor a first condition (28) and output a first signal (32) associated with the first condition (28);
a second sensor (26) configured to monitor a second condition (30) and output a second signal (34) associated with the second condition (30);
a controller (36) configured to receive and process the first signal (32) to establish a first reaction relative to the first condition (28) and toward reaching a goal, configured to receive and process the second signal (34) to establish a second reaction relative to the second condition (30) and toward reaching the goal, and is configured to establish a third reaction relative to the second condition (30) and toward reaching the goal if the first sensor (24) is malfunctioning.

2. The sensor failure compensation system (46) set forth in claim 1, wherein the goal is a destination.

3. The sensor failure compensation system (46) set forth in claim 1, wherein the first sensor (24) is one of a long distance imaging device and a short distance imaging device and the second sensor (26) is the other of the long distance imaging device and the short distance imaging device.

4. The sensor failure compensation system (46) set forth in claim 1, wherein the first sensor (24) is a long distance imaging device, the second sensor (26) is a short distance imaging device, the first condition (28) is a long range scene, the second condition (30) is a short range scene, and the third reaction is slowing down of the vehicle (20).

5. The sensor failure compensation system (46) set forth in claim 1, wherein the first sensor (24) is a preferred sensor for a particular vehicle function, the second sensor (26) is a less capable, secondary, sensor for the particular vehicle function, and optionally wherein the first and second sensors (24, 26) are of the same technology.

6. The sensor failure compensation system (46) set forth in claim 1, wherein the first sensor (24) is a long distance imaging device, the second sensor (26) is a short distance imaging device, the first condition (28) is a change in a signal light, and the third reaction is changing of a route to avoid signal lights.

7. The sensor failure compensation system (46) set forth in claim 1, wherein at least one of the first and second sensors (24, 26) is:
a radar sensor;
a LiDAR sensor;
or a camera.

8. The sensor failure compensation system (46) set forth in claim 1, wherein the controller (36) includes a processor (58) and an electronic storage medium (60).

9. The sensor failure compensation system of claim 8, wherein the electronic storage medium (60) stores a computer software product (62) that is executed by the controller (36) of the automated vehicle (20), wherein the automated vehicle (20) includes first and second sensors (24, 26) configured to output respective first and second signals (32, 34) associated with respective first and second regions (28, 30), the computer software product (62) comprising:
a first module (66) configured to receive and process the first signal (32) toward performing a first task;
a second module (68) configured to receive and process the second signal (34) toward performing a second task; and
a compensation module (70) configured to receive the second signal (34) upon failure of the first module (66) receiving the first signal (32), and to perform a third task as an alternative to the first task.

10. The computer software product (62) set forth in claim 9, further comprising a database (64) including preprogrammed instructions specifying the third task.

11. The computer software product (62) set forth in claim 10, wherein the third task is a reduction in vehicle speed.

12. An automated vehicle (20) comprising the sensor failure compensation system according to any preceding claim.

13. An automated vehicle (20) comprising:
at least one vehicle control adapted to produce a plurality of vehicle reactions; and
the sensor failure compensation system (46) according to any preceding claim, wherein
the first condition is a first region and the second condition is a second region, and
the third reaction is an alternative to the first reaction.

14. The automated vehicle (20) set forth in claim 13, wherein:
the controller (36) includes a processor (58) and an electronic storage medium (60); and
the sensor failure compensation system (46) includes a first and second modules (66, 68) executed by the processor (58), stored in the electronic storage medium (60), and configured to receive and process the respective first and second signals (32, 34) to achieve the respective first and second reactions.

15. The automated vehicle (20) set forth in claim 14, wherein the sensor failure compensation system (46) includes a compensation module (70) executed by the processor (58), stored in the electronic storage medium (60), and configured to determine and implement the third reaction.
